# EUROPEAN PATENT APPLICATION

(11) **EP 3 135 705 A1**
(43) Date of publication of application: **01.03.2017**
(21) Application number: 15782713.0
(22) Date of filing: 21.04.2015
(51) Int. Cl.: C08G 63/189, G02B 1/04

(54) **POLYESTER RESIN, OPTICAL LENS, AND OPTICAL LENS SYSTEM**

(30) Priority: 24.04.2014 JP 2014090191
(71) Applicant: Mitsubishi Gas Chemical Company, Inc., Tokyo 100-8324 (JP)
(72) Inventor: KATO, Noriyuki, Tokyo 125-8601 (JP); HIRAKAWA, Manabu, Tokyo 125-8601 (JP); ISHIZUKA, Hirohito, Kamisu-shi Ibaraki 314-0102 (JP); HIROKANE, Takeshi, Hiratsuka-shi Kanagawa 254-0016 (JP); MINEZAKI, Takuya, Hiratsuka-shi Kanagawa 254-0016 (JP)
(74) Representative: Vossius & Partner Patentanwälte Rechtsanwälte mbB
(86) International application number: PCT/JP2015/062124
(87) International publication number: WO 2015/163323

(57) **Abstract**

The polyester resin according to the present invention is a polyester resin mainly including a diol structural unit and a dicarboxylic acid structural unit, wherein 10 to 84 mol% of the diol structural unit is a structural unit derived from ethylene glycol, 16 to 90 mol% of the diol structural unit is a structural unit derived from neopentyl glycol represented by a particular formula (i), and 50 to 100 mol% of the dicarboxylic acid structural unit is a structural unit derived from a naphthalenedicarboxylic acid. Further, the optical lens according to the present invention is obtained by molding the polyester resin. Furthermore, the optical lens system according to the present invention includes the optical lens and an additional optical lens.

## Description

### Technical Field

The present invention relates to a polyester resin, an optical lens, and an optical lens system.

### Background Art

Optical glasses and optical transparent resins are used for materials for optical elements used in optical systems of various cameras, such as a camera, a film-integrated camera, and a video camera. Optical glasses are excellent in, for example, heat resistance, transparency, dimensional stability, and chemical resistance, and there exist various optical glasses having different refractive indexes and Abbe's numbers. However, optical glasses have problems of a high material cost, poor fabricability, and low productivity. In particular, an extremely high level of technique and a high cost are required to process an optical glass into an aspheric lens for aberration correction, which is a major obstacle to practical use.

In contrast to the above-mentioned optical glass, optical transparent resins, especially thermoplastic transparent resins, can be processed into optical lenses in mass production with use of injection molding, and in addition, have an advantage of facilitating manufacture of an aspheric lens, and for this reason are currently used for camera lenses, Examples of the optical transparent resin include polycarbonate composed of bisphenol A, polymethyl methacrylate, and amorphous polyolefin.

In common optical systems of a camera, a combination of a plurality of concave lenses and convex lenses provides aberration correction. That is, a chromatic aberration, which is generated by a convex lens, is combined to be canceled with a chromatic aberration, the sign of which is opposite to that of the convex lens, generated by a concave lens. Then, the concave lens is required to have a high dispersiveness (small Abbe's number).

An overview of the above-mentioned optical thermoplastic transparent resins from the viewpoint of high dispersiveness (small Abbe's number) is as follows: the refractive index and the Abbe's number of polycarbonate composed of bisphenol A are approximately 1.59 and approximately 32, respectively; the refractive index and the Abbe's number of polymethyl methacrylate are approximately 1.49 and approximately 58, respectively; and the refractive index and the Abbe's number of amorphous polyolefin are approximately 1.54 and approximately 56, respectively. Only polycarbonate can be used for concave lenses for aberration correction. However, the Abbe's number of 32 does not indicate that the dispersiveness is sufficiently high, and a new material which can be used for concave lenses for aberration correction is demanded.

Patent Literature 1 discloses a polyester resin composition as a resin for a concave lens for aberration correction obtained by copolymerizing a fluorine-based dihydroxy compound having a refractive index of approximately 1.66 and an Abbe's number of approximately 20.

Patent Literature 2 discloses a polyester including: a naphthalenedicarboxylic acid; and tricyclodecanedimethylol and ethylene glycol.

Patent Literature 3 describes an optical lens including a polyester resin including a unit derived from ethylene glycol, a unit derived from a C₃₋₁₆ diol, and a unit derived from a naphthalenedicarboxylic acid, wherein the polyester resin has a high refractive index and a small Abbe's number.

### Citation List

### Patent Literature

Patent Literature 1: Japanese Patent Laid-Open No. 2006-335974
Patent Literature 2: Japanese Patent Publication No. 06-037548
Patent Literature 3: International Publication No. WO 2010/004965

### Summary of Invention

### Technical Problem

Although the resin described in Patent Literature 1 has a sufficiently high dispersiveness (small Abbe's number), the resin has a drawback for a resin for optical lenses. Specifically, the resin has a very high melt viscosity and poor moldability due to copolymerization by using a bulky and rigid fluorine-based dihydroxy compound in large amount. Decreasing the melt viscosity in molding, in other words, raising the molding temperature appears to be promising to enhance the moldability, but a disadvantage is caused, such as more pronounced coloration in molding and grime on a mold due to a pyrolysis product. Lowering the degree of polymerization to lower the melt viscosity also appears to be promising, but also in this case, a disadvantage of grime on a mold made of a low molecular weight substance or a decomposed product thereof is likely to be caused due to that the amount of a low molecular weight component in the resin becomes relatively larger. As described above, the resin described in Patent Literature 1 does not have a combination of excellent optical characteristics (high refractive index, small Abbe's number) and sufficient moldability in practical use.

The resin described in Patent Literature 2 has a large Abbe's number of 26 or larger, which does not indicate that the resin has a sufficiently high dispersiveness (small Abbe's number). In addition, the resin described in Patent Literature 3 is required for enhancement in moldability such as thermal stability and decreased degradation in a light resistance test.

The present invention was made in view of the above problems, and an object of the present invention is to provide a polyester resin which has a high refractive index and a small Abbe's number in combination with excellent stability in molding, an optical lens, and an optical lens system.

### Solution to Problem

As a result of diligent study, the present inventors have found that a polyester resin including a structural unit derived from a particular glycol and a structural unit derived from a particular dicarboxylic acid provides excellent performance, particularly when being used for an optical lens, and completed the present invention.

Specifically, the present invention is as follows.
[1] A polyester resin mainly comprising a diol structural unit and a dicarboxylic acid structural unit, wherein
   10 to 84 mol% of the diol structural unit is a structural unit derived from ethylene glycol,
   16 to 90 mol% of the diol structural unit is a structural unit derived from neopentyl glycol represented by the formula (i) below, and
   50 to 100 mol% of the dicarboxylic acid structural unit is a structural unit derived from a naphthalenedicarboxylic acid. 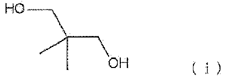
[2] The polyester resin according to [1], wherein the structural unit derived from the naphthalenedicarboxylic acid is a structural unit derived from 2,6-naphthalenedicarboxylic acid.
[3] The polyester resin according to [1] or [2], wherein 90 to 100 mol% of the dicarboxylic acid structural unit is the structural unit derived from the naphthalenedicarboxylic acid.
[4] The polyester resin according to any of [1] to [3], wherein
   20 to 84 mol% of the diol structural unit is the structural unit derived from ethylene glycol, and
   16 to 80 mol% of the diol structural unit is the structural unit derived from neopentyl glycol.
[5] The polyester resin according to any of [1] to [4], satisfying the following conditions (1) and (2):
   (1) a measurement value of intermediate glass transition temperature of the polyester resin measured in accordance with Testing Methods for Transition Temperatures of Plastics in JIS K7121 is 100°C or higher; and
   (2) a measurement value of melt volume rate of the polyester resin is 10 to 80 cm³/10 min.
[6] The polyester resin according to any of [1] to [5], satisfying the following condition (3):
   (3) a test piece obtained by annealing a molded piece of the polyester resin at 90 to 100°C for 10 hours has a refractive index of 1.60 or higher and an Abbe's number of 21 or smaller.
[7] An optical lens obtained by molding the polyester resin according to any of [1] to [6].
[8] The optical lens according to [7], being an aspheric lens.
[9] The optical lens according to [7] or [8], being a camera lens.
[10] An optical lens system comprising the optical lens according to any of [7] to [9] and an additional optical lens.

### Advantageous Effects of Invention

The polyester resin according to the present invention has a high refractive index and a small Abbe's number in combination with excellent stability in molding.

### Description of Embodiments

Hereinafter, an embodiment for carrying out the present invention (hereinafter, simply referred to as "present embodiment".) is described in detail. The following present embodiment is illustrative for explaining the present invention, and is not construed as limiting the present invention to the following content. The present invention can be appropriately modified and performed within the gist thereof.

A polyester resin according to the present embodiment is a polyester resin mainly comprising a diol structural unit and a dicarboxylic acid structural unit. In addition, 10 to 84 mol% of the diol structural unit is a structural unit derived from ethylene glycol, and 16 to 90 mol% of the diol structural unit is a structural unit derived from neopentyl glycol represented by the following formula (i) in the polyester resin according to the present embodiment. Owing to the configuration, the polyester resin according to the present embodiment has a high refractive index and a small Abbe's number in combination with excellent stability in molding. The polyester resin according to the present embodiment includes the particular structural units, as described above, and as a result the polyester resin has a low birefringence, and provides excellent performance particularly when being used for an optical lens. In addition, the polyester resin according to the present embodiment can be injection-molded and has a high thermal stability, and thus is more excellent in productivity for lens production than a glass material conventionally used. In other words, the polyester resin according to the present embodiment enables simpler production of a high refractive index/low birefringence aspheric lens, which is technically difficult to obtain by processing a conventional glass lens, by using injection molding.

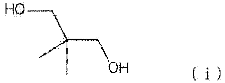

In the present specification, "mainly" means that the total percentage of the diol structural unit and the dicarboxylic acid structural unit in the total structural units of the polyester resin is 50 mol% or more. In the present embodiment, the total percentage is preferably 80 mol% or more, more preferably 90 mol% or more, and even more preferably 100 mol%,

In addition, from the viewpoint of better physical properties, the percentage of the structural unit derived from ethylene glycol in the diol unit is preferably 20 to 84 mol%, more preferably 20 to 82 mol%, even more preferably 30 to 80 mol%, and further preferably 40 to 70 mol%, and the percentage of the structural unit derived from neopentyl glycol is preferably 16 to 80 mol%, more preferably 18 to 80 mol%, even more preferably 20 to 70 mol%, and further preferably 30 to 60 mol%.

In the polyester resin according to the present embodiment, 50 to 100 mol% of the dicarboxylic acid structural unit is a structural unit derived from a naphthalenedicarboxylic acid, preferably 80 to 100 mol%, and more preferably 90 to 100 mol% of the dicarboxylic acid structural unit is a structural unit derived from a naphthalenedicarboxylic acid. The structural unit derived from a naphthalenedicarboxylic acid in the above range allows the polyester resin according to the present embodiment to have a high refractive index and a small Abbe's number, and the polyester resin can be suitably used for an optical lens.

Examples of the naphthalenedicarboxylic acid structural unit include, but not limited to, structural units derived from 1,3-naphthalenedicarboxylic acid, 1,4-naphthalenedicarboxylic acid, 1,5-naphthalenedicarboxylic acid, 2,6-naphthalenedicarboxylic acid, 2,7-naphthalenedicarboxylic acid, etc. In view of a refractive index, an Abbe's number, heat resistance, mechanical performance, and economic efficiency, a structural unit derived from 2,6-naphthalenedicarboxylic acid is preferred among the above structural units. One of them may be included as the dicarboxylic acid unit, or two or more of them may be included in combination. Alternatively, an ester of a dicarboxylic acid and a C₁₋₆ alcohol may be used.

Examples of the dicarboxylic acid structural unit included in the polyester resin according to the present embodiment other than a structural unit derived from a naphthalenedicarboxylic acid include, but not limited to, structural units derived from an aromatic dicarboxylic acid such as terephthalic acid, isophthalic acid, phthalic acid, 2-methylterephthalic acid, biphenyldicarboxylic acid, and tetralindicarboxylic acid, and an aliphatic dicarboxylic acid such as succinic acid, glutaric acid, adipic acid, pimelic acid, suberic acid, azelaic acid, sebacic acid, decanedicarboxylic acid, dodecanedicarboxylic acid, cyclohexanedicarboxylic acid, decalindicarboxylic acid, norbornanedicarboxylic acid, tricyclodecanedicarboxylic acid, pentacyclododecanedicarboxylic acid, 3,9-bis(1,1-dimethyl-2-carboxyethyl)-2,4,8,10-tetraoxaspiro[5.5]undecane, 5-carboxy-5-ethyl-2-(1,1-dimethyl-2-carboxyethyl)-1,3-dioxane, and a dimer acid. The dicarboxylic acid structural unit included in the polyester resin according to the present embodiment may be constituted with one of the exemplified structural units or two or more thereof. Alternatively, an ester of a dicarboxylic acid and a C₁₋₆ alcohol may be used.

In the case that the polyester resin according to the present embodiment includes a structural unit derived from an aromatic dicarboxylic acid other than naphthalenedicarboxylic acids as the dicarboxylic acid structural unit, the percentage of the structural unit derived from an aromatic dicarboxylic acid, including a naphthalenedicarboxylic acid, in the total dicarboxylic acid structural unit is preferably 80 to 100 mol%, more preferably 90 to 100 mol%, and even more preferably 100 mol%.

To adjust the melt viscoelasticity, molecular weight, etc., the polyester resin according to the present embodiment may include, within a range which does not impair the object of the present embodiment, a monoalcohol structural unit such as a butyl alcohol, a hexyl alcohol, and an octyl alcohol; a polyalcohol structural unit which is trivalent or higher-valent such as trimethylolpropane, glycerin, 1,3,5-pentanetriol, and pentaerythritol; a monocarboxylic acid structural unit such as benzoic acid, propionic acid and butyric acid; a polycarboxylic acid structural unit such as trimellitic acid and pyromellitic acid; and an oxyacid structural unit such as glycolic acid, lactic acid, hydroxybutyric acid, 2-hydroxyisobutyric acid, and hydroxybenzoic acid.

The refractive index of the polyester resin according to the present embodiment is preferably 1.60 or higher in a typical situation, in view of the case that the polyester resin according to the present embodiment is used for an optical lens, especially a concave lens for aberration correction. The upper limit of the refractive index is not particularly limited, but preferably 1.7 or lower in view of the balance with other physical properties. In addition, the Abbe's number is preferably 25 or smaller, more preferably 21 or smaller, and even more preferably 20 or smaller. The lower limit of the Abbe's number is not particularly limited, but preferably 18 or larger in view of the balance with other physical properties. For example, the refractive index and Abbe's number can be set to be preferred values by adjusting the structural unit of the polyester resin and the percentage thereof as described above.

The refractive index and Abbe's number can be determined in accordance with the following measurement method. An injection-molded piece of the polyester resin which has been annealed in an oven at a temperature lower than the intermediate glass transition temperature of the polyester resin by approximately 20°C (90 to 100°C) for 10 hours is used for a measurement sample, and the refractive index is a value measured at 589 nm (d-line), and the Abbe's number is a value calculated by using the refractive indexes measured at 656 nm (C-line), 486 nm (F-line), and the d-line.

The refractive index thus measured and the Abbe's number of the polyester resin according to the present embodiment are preferably 1.60 or higher and 21 or smaller, respectively, more preferably 1.61 or higher and 20 or smaller, respectively, and even more preferably 1.62 or higher and 19.5 or smaller, respectively.

The polyester resin according to the present embodiment preferably satisfies the following conditions (1) and (2). Details of the conditions will be described later.
(1) A measurement value of the intermediate glass transition temperature of the polyester resin measured in accordance with Testing Methods for Transition Temperatures of Plastics in JIS K7121 is 100°C or higher.
(2) A measurement value of the melt volume rate (hereinafter, simply referred to as "MVR") of the polyester resin is 10 to 80 cm³/10 min.

The intermediate glass transition temperature of the polyester resin according to the present embodiment measured by using a differential scanning calorimeter in accordance with JIS K7121 is not particularly limited, but preferably 100°C or higher in a typical situation, more preferably 105°C or higher, and even more preferably 110°C or higher. If the intermediate glass transition temperature of the polyester resin is in the above range, an optical lens with the polyester resin according to the present embodiment tends to be enhanced in resistance to surface treatment such as hardcoating. The intermediate glass transition temperature of the polyester resin can be set to be 100°C or higher by appropriately selecting a conventionally known diol and dicarboxylic acid, such as a diol having a cyclic acetal skeleton or an aromatic hydrocarbon group and a dicarboxylic acid having a naphthalene skeleton.

The viscosity of the polyester resin according to the present embodiment is not particularly limited, but preferably in the range of 10 to 80 cm³/10 min in MVR in view that injection molding is selected for a method for molding into an optical lens and an optical lens provides the mechanical performance sufficiently. For the MVR, a value measured with an MELT INDEXER T-111 manufactured by Toyo Seiki Seisaku-Sho, Ltd. at a temperature of 260°C and a load of 2.16 kg may be used. The MVR of the polyester resin according to the present embodiment is more preferably 15 to 60 cm³/10 min, even more preferably 20 to 60 cm³/10 min, and further preferably 30 to 60 cm³/10 min in view of inhibiting the occurrence of birefringence in molding.

If the MVR is in the range, the polyester resin according to the present embodiment tends to have a better balance among moldability, mechanical performance, and low birefringency. If the MVR is 10 cm³/10 min or higher, the occurrence of birefringence in molding can be effectively inhibited, and an optical lens having low birefringence tends to be obtained. If the MVR is 80 cm³/10 min or lower, an optical lens having better mechanical performance tends to be obtained. The MVR can be adjusted in the above preferred range by, for example, measuring a stirring torque of a reactor and extracting the polyester resin at a timing when the stirring torque reaches a predetermined value.

The method for producing the polyester resin according to the present embodiment is not particularly limited, and a conventionally known method for producing polyester may be applied. Examples thereof include a melt polymerization method such as a transesterification method and a direct esterification method, and a solution polymerization method. Among them, a transesterification method is preferred.

For a catalyst such as a transesterification catalyst, an esterification catalyst, and a polycondensation catalyst, an etherification-preventing agent, a stabilizer such as a thermal stabilizer and a light stabilizer, a polymerization modifier, etc., to be used in producing the polyester resin according to the present embodiment, conventionally known ones may be used, and they are appropriately selected depending on the reaction rate, and the color tone, safety, thermal stability, weatherability, and elution characteristics of the polyester resin. Examples of the catalyst include, but not limited to, compounds (e.g., fatty acid salts, carbonates, phosphates, hydroxides, chlorides, oxides, alkoxides) of a metal such as zinc, lead, cerium, cadmium, manganese, cobalt, lithium, sodium, potassium, calcium, nickel, magnesium, vanadium, aluminum, titanium, antimony, and tin; and metal magnesium. One of them may be used singly, or two or more of them may be used together. The amount of the transesterification catalyst to be used in a transesterification method is preferably 0.001 to 1 mol% and more preferably 0.005 to 0.5 mol%, based on the dicarboxylic acid unit, and the transesterification catalyst to be used is even more preferably a manganese compound among the above compounds. The amount of the polycondensation catalyst to be used is preferably 0.001 to 1 mol% and more preferably 0.005 to 0.5 mol%, based on the dicarboxylic acid unit, and the polycondensation catalyst to be used is even more preferably an antimony compound among the above compounds.

To the polyester resin according to the present embodiment may be added another resin, an additive such as an antioxidant, a light stabilizer, an ultraviolet absorber, a plasticizer, an extender, a matting agent, a drying regulator, an antistatic agent, an antisettling agent, a surfactant, a flow improver, a drying oil, a wax, a filler, a colorant, a reinforcing agent, a surface-smoothing agent, a leveling agent, a curing accelerator, and a thickener, and a molding aid. Addition of an ester of a polyhydric alcohol and a fatty acid, especially glyceryl stearate, as a flow improver preferably in a content of 5000 ppm or less, more preferably in a content of 3000 ppm or less is preferred because of less tendency to cause troubles due to release failure.

From the viewpoint of reduction of the foreign matter content of the polyester resin according to the present embodiment, it is preferred to perform filtration of melted raw materials, filtration of a catalyst solution, and filtration of a melted oligomer. The mesh size of a filter is preferably 7 µm or smaller and more preferably 5 µm or smaller. It is also preferred to perform filtration of a produced resin with use of a polymer filter. The mesh size of a polymer filter is preferably 100 µm or smaller and more preferably 30 µm or smaller. A step of collecting a resin pellet is carried out in a low-dust environment, and the class is preferably Class 1000 or lower and more preferably Class 100 or lower.

The polyester resin according to the present embodiment may be used for various application, such as injection-molded products, extrusion-molded products such as sheets, films, and pipes, bottles, foams, pressure-sensitive adhesive materials, adhesives, and coating materials. More specifically, the sheet may be single-layered or multilayered. The film may also be single-layered or multilayered, and may be nonoriented, uniaxially oriented, or biaxially oriented, and may be laminated on a steel sheet or the like. The bottle may be a direct blow-molded bottle, an injection blow-molded bottle, or an injection-molded bottle. The foam may be a bead foam or an extruded foam. The polyester resin according to the present embodiment can be suitably used for applications which require high heat resistance and water vapor barrier properties, such as products to be used in an automobile, packaging materials for import/export, electronics materials such as a back sheet for a solar cell, and food packaging materials for retort treatment or microwave heating.

In particular, an optical lens obtained by injection-molding the polyester resin according to the present embodiment into a lens with an injection molding machine or an injection-compression molding machine tends to be excellent. Also in obtaining an optical lens, molding is carried out in a low-dust environment from the viewpoint of preventing contamination with a foreign matter, and the class is preferably Class 1000 or lower and more preferably Class 100 or lower.

By molding the polyester resin according to the present embodiment, an optical lens according to the present embodiment can be obtained. The optical lens is preferably an aspheric lens, as necessary. In the case of an aspheric lens, spherical aberration can be reduced to substantially zero in one lens, and it is not required to remove spherical aberration with a combination of two or more spherical lenses, and thus weight saving and reduction of production cost can be achieved. Accordingly, an aspheric lens is particularly useful for a camera lens among optical lenses. The astigmatism of an aspheric lens is preferably 0 to 15 mλ and more preferably 0 to 10 mλ.

A coat layer such as an antireflection layer and a hardcoat layer may be provided on the surface of the optical lens according to the present embodiment, as necessary. The antireflection layer may be single-layered or multilayered, and may be made of an organic substance or an inorganic substance, but preferably made of an inorganic substance. Specific examples of the inorganic substance include oxides and fluorides such as silicon oxide, aluminum oxide, zirconium oxide, titanium oxide, cerium oxide, magnesium oxide, and magnesium fluoride.

The optical lens according to the present embodiment may be used for various lenses such as pick-up lenses, f-θ lenses, and lenses for eyeglasses, and can be particularly suitably used for lenses for chromatic aberration correction because of the high refractive index and small Abbe's number. Specifically, the optical lens according to the present embodiment can be suitably used for lenses for a single-lens reflex camera, a digital still camera, a video camera, a cell phone with a camera, a film with a lens, a telescope, binoculars, a microscope, a projector, etc. In the case that the optical lens according to the present embodiment is a concave lens, the optical lens may be used for an optical lens system with a small chromatic aberration in combination with an additional convex lens having a large Abbe's number. That is, an optical lens system according to the present embodiment includes the optical lens according to the present embodiment and an additional optical lens. In this case, the Abbe's number of a convex lens to be combined is preferably 40 to 60 and more preferably 50 to 60.

### Examples

Hereinafter, the present embodiment is described with reference to Examples in more detail, but the scope of the present embodiment is not limited to such Examples.

### <Method for evaluating polyester resin>

A method for evaluating a polyester resin and an optical lens used in Examples is as follows.

### (1) Composition of resin

The percentage of each of the ethylene glycol structural unit, other diol structural unit, and naphthalenedicarboxylic acid structural unit in the polyester resin was calculated on the basis of ¹H-NMR measurement. The measurement apparatus used was a JNM-LA500FT manufactured by JELL Ltd., and measurement was performed at 500 MHz. For the solvent, deuterated chloroform and deuterated trifluoroacetic acid were used.

### (2) Intermediate glass transition temperature (Tg)

A differential scanning calorimeter (DSC/TA-60WS manufactured by Shimadzu Corporation) was used. Approximately 10 mg of a polyester resin contained in an aluminum unsealed container was heated to melt to 280°C in a nitrogen gas flow (50 mL/min) at a temperature elevation rate of 20°C%min and quickly cooled, and the resultant was used as a measurement sample to determine the intermediate glass transition temperature of the polyester resin. Specifically, the measurement sample was subjected to measurement under the conditions according to JIS K7121 to calculate the intermediate glass transition temperature.

### (3) Refractive index and Abbe's number

A polyester resin obtained was vacuum-dried at a temperature lower than the intermediate glass transition temperature of the polyester resin by approximately 20°C (90 to 100°C) for 10 hours, and then injection-molded into an isosceles right triangle with a side length of 20 mm (thickness: 3 mm) with the injection molding machine SH50 manufactured by Sumitomo Heavy Industries, Ltd. at a cylinder temperature of 250°C and a mold temperature lower than the glass transition temperature of the resin by 10 to 50°C. The molded piece was annealed in an oven at a temperature lower than the intermediate glass transition temperature by approximately 20°C (90 to 100°C) for 10 hours to prepare a measurement sample. The refractive index was measured with a refractometer manufactured by ATAGO CO., LTD. at 589 nm (d-line), and the Abbe's number was calculated by using the refractive indexes measured at 656 nm (C-line), 486 nm (F-line), and the d-line.

### (4) Evaluation of total light transmittance, haze, and appearance

The total light transmittance and haze of each of samples in Examples 1 to 5 were measured with a Spectro Color Meter SE2000 and Haze Meter NDH2000 manufactured by NIPPON DENSHOKU INDUSTRIES Co., LTD. Specifically, a polyester resin was vacuum-dried at a temperature lower than the intermediate glass transition temperature of the polyester resin by approximately 20°C (90 to 100°C) for 10 hours, and then injection-molded into a disk having a thickness of 2 mm with the injection molding machine SH50 manufactured by Sumitomo Heavy Industries, Ltd. at a cylinder temperature of 250°C and a mold temperature lower than the glass transition temperature of the resin by 10 to 50°C, and the disk was used for a sample. The appearance of the sample was visually evaluated, and the case that no haze was visually found was rated as O.

### (5) MVR

MVR was measured with an MELT INDEXER T-111 manufactured by Toyo Seiki Seisahu-Sho, Ltd. at a temperature of 260°C and a load of 2.16 kg.

### <Preparation of polyester resin>

A raw material monomer, which will be described later, was charged into an apparatus for producing a polyester resin provided with a packed rectifying column, a partial condenser, a total condenser, a cold trap, a stirrer, a heater, and a nitrogen-introducing tube, or a glass flask provided with a heater, a stirring blade, a partial condenser, a trap, a thermometer, and a nitrogen gas-introducing tube. Transesterification reaction was performed by increasing the temperature to 230°C under a nitrogen atmosphere in the presence of 0.023 mol% of zinc acetate dihydrate based on the dicarboxylic acid component. After the reaction conversion rate of the dicarboxylic acid component reached 90% or higher, 0.14 mol% of germanium oxide and 0.12 mol% of phosphoric acid, based on the dicarboxylic acid component were added thereto, and temperature elevation and pressure reduction were gradually performed, and eventually the reaction mixture was polycondensed at a temperature of 250 to 280°C and a pressure of 0.1 kPa or lower. The reaction was terminated at a timing when an appropriate melt viscosity was reached, and the polyester resin was taken out.

### <Example 1>

Dimethyl naphthalenedicarboxylate (hereinafter, referred to as NDCM), ethylene glycol (hereinafter, referred to as EG), and neopentyl glycol (NPG) were charged for polycondensation reaction at a molar ratio of 1/1/0.8 under the above reaction conditions. The composition of the polyester resin obtained was analyzed, and the result indicated that the polyester resin contained EG/NPG at a ratio of 43/57.

The refractive index nd, the Abbe's number vd, and the glass transition temperature Tg of the resin were 1.624, 19.5, and 113°C, respectively. The MVR was 35 cm³/10 min.

### <Example 2>

NDCM/EG/NPG were charged for polycondensation at a molar ratio of 1/1/0.6 under the same reaction conditions as in Example 1. The composition of the polyester resin obtained was analyzed, and the result indicated that the polyester resin contained EG/NPG at a ratio of 54/36.

The refractive index nd, the Abbe's number vd, and the glass transition temperature Tg of the resin were 1.629, 19.1, and 115°C, respectively. The MVR was 40 cm³/10 min.

### <Example 3>

NDCM/EG/NPG were charged for polycondensation at a molar ratio of 1/1/0.4 under the same reaction conditions as in Example 1. The composition of the polyester resin obtained was analyzed, and the result indicated that the polyester resin contained EG/NPG at a ratio of 82/18.

The refractive index nd, the Abbe's number vd, and Tg of the resin were 1.635, 18.8, and 118°C, respectively. The MVR was 3 8 cm³/10 min.

### <Example 4>

NDCM/EG/NPG were charged for polycondensation at a molar ratio of 1/1/1 under the same reaction conditions as in Example 1. The composition of the polyester resin obtained was analyzed, and the result indicated that the polyester resin contained EG/NPG at a ratio of 21/79.

The refractive index nd, the Abbe's number vd, and Tg of the resin were 1.618, 19.8, and 110°C, respectively. The MVR was 40 cm³/10 min.

### <Example 5>

NDCM/EG/NPG were charged for polycondensation at a molar ratio of 1/1/0.8. To obtain a polyester resin having a higher viscosity under the above reaction conditions, the degree of polymerization was managed by using the stirring torque of the reactor as an indicator. At a timing when the degree of polycondensation exceeded those of Examples 1 to 4, the resin was extracted. The composition of the polyester resin obtained was analyzed, and the result indicated that the polyester resin contained EG/NPG at a ratio of 43/57.

The refractive index nd, the Abbe's number vd, and the glass transition temperature Tg of the resin were 1.624, 19.5, and 113°C, respectively. The MVR was 17 cm³/10 min.

The evaluation results of the total light transmittance, haze, and appearance of the polyester resins obtained as described above in Examples 1 to 5 are shown in Table 1 below.

**[Table 1]**

| | Total light transmittance % | Haze | Appearance |
|---|---|---|---|
| Example 1 | 89 | 0.22 | ○ |
| Example 2 | 89 | 0.23 | ○ |
| Example 3 | 89 | 0.32 | ○ |
| Example 4 | 89 | 0.25 | ○ |
| Example 5 | 89 | 0.25 | ○ |

The present application claims the priority based on the Japanese patent application (Japanese Patent Application No. 2014-090191) filed on April 24, 2014, the content of which is incorporated herein by reference.

### Industrial Applicability

The polyester resin according to the present invention has high thermal stability and excellent moldability, and can provide an optical lens having a small Abbe's number and a high refractive index. Thus, the polyester resin according to the present invention is extremely useful in that it can be used for fields in which expensive high refractive index glass lenses have been conventionally used, such as cameras, telescopes, binoculars, and television projectors. In addition, the optical lens according to the present invention is useful for high refractive index/low birefringence aspheric lenses, in particular, useful for concave lenses for chromatic aberration correction.

## Claims

1. A polyester resin mainly comprising a diol structural unit and a dicarboxylic acid structural unit, wherein
10 to 84 mol% of the diol structural unit is a structural unit derived from ethylene glycol,
16 to 90 mol% of the diol structural unit is a structural unit derived from neopentyl glycol represented by the formula (i) below, and
50 to 100 mol% of the dicarboxylic acid structural unit is a structural unit derived from a naphthalenedicarboxylic acid.

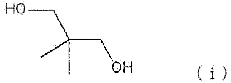

2. The polyester resin according to claim 1, wherein the structural unit derived from the naphthalenedicarboxylic acid is a structural unit derived from 2,6-naphthalenedicarboxylic acid.

3. The polyester resin according to claim 1 or 2, wherein 90 to 100 mol% of the dicarboxylic acid structural unit is the structural unit derived from the naphthalenedicarboxylic acid.

4. The polyester resin according to any one of claims 1 to 3, wherein
20 to 84 mol% of the diol structural unit is the structural unit derived from ethylene glycol, and
16 to 80 mol% of the diol structural unit is the structural unit derived from neopentyl glycol.

5. The polyester resin according to any one of claims 1 to 4, satisfying the following conditions (1) and (2):
(1) a measurement value of intermediate glass transition temperature of the polyester resin measured in accordance with Testing Methods for Transition Temperatures of Plastics in JIS K7121 is 100°C or higher; and
(2) a measurement value of melt volume rate of the polyester resin is 10 to 80 cm³/10 min.

6. The polyester resin according to any one of claims 1 to 5, satisfying the following condition (3):
(3) a test piece obtained by annealing a molded piece of the polyester resin at 90 to 100°C for 10 hours has a refractive index of 1.60 or higher and an Abbe's number of 21 or smaller.

7. An optical lens obtained by molding the polyester resin according to any one of claims 1 to 6.

8. The optical lens according to claim 7, being an aspheric lens.

9. The optical lens according to claim 7 or 8, being a camera lens.

10. An optical lens system comprising the optical lens according to any one of claims 7 to 9 and an additional optical lens.
